# EUROPÄISCHE PATENTSCHRIFT

(11) **EP 2 993 359 B1**
(45) Veröffentlichungstag und Bekanntmachung des Hinweises auf die Patenterteilung: **06.03.2019**
(21) Anmeldenummer: 15002588.0
(22) Anmeldetag: 01.09.2015
(51) Int. Cl.: F15B 5/00, F15B 19/00, G05B 9/03

(54) **STELLUNGSREGLER FÜR EIN PNEUMATISCHES STELLGERÄT**
POSITION REGULATOR FOR A PNEUMATIC POSITIONING DEVICE
REGULATEUR DE POSITION POUR UN APPAREIL DE REGLAGE PNEUMATIQUE

(30) Priorität: 03.09.2014 DE 102014013098
(43) Veröffentlichungstag der Anmeldung: 09.03.2016
(73) Patentinhaber: Samson Aktiengesellschaft, 60314 Frankfurt (DE)
(72) Erfinder: Wagner-Stürz, David, 64367 Mühltal (DE)
(74) Vertreter: Schmid, Nils T.F.

(56) Entgegenhaltungen:
- DE-A1- 4 005 546
- DE-A1-102012 021 388

## Beschreibung

Die Erfindung betrifft einen Stellungsregler für ein pneumatisches Stellgerät, wie ein pneumatische angetriebenes Stellventil oder Sicherheitsventil, einer prozesstechnischen Anlage, wie einer Raffinerie, eine Lebensmittelanlage, eine Brauerei oder eine petrochemische Anlage, oder dergleichen.

An Stellungsregler, die in prozesstechnischen Anlagen eingesetzt werden, sind hohe Anforderungen hinsichtlich Betriebssicherheit, Regelgenauigkeit und Instandhaltungsfreundlichkeit zu stellen. Bei der Verarbeitung von Gefahrstoffen oder Produkten, die hygienisch oder in deren Zusammensetzung fehlerfrei sein müssen, entstehen durch Störungen einzelner Prozessregelkomponenten und/oder damit gegebenenfalls verbundene Instandhaltungseinsätze und Ausfallzeiten hohe Kosten.

Ein flexibles pneumatisches Antriebssystem mit einem Stellungsregler zum Ansteuern eines Stellventils einer prozesstechnischen Anlage ist aus DE 10 2012 021 388 A1 bekannt. Das bekannte Antriebssystem löst regelungstechnisch schwierige Aufgabenstellungen dadurch, dass der pneumatische Antrieb mehrere I/P-Wandler zum Erzeugen mehrerer Stelldrucksignale aufweist und die Stelldrucksignale zusammenführt, bevor diese die Arbeitskammer beaufschlagen. Durch die Vielzahl der bei dem bekannten Antriebssystem eingesetzten I/P-Wandler steigt jedoch das Risiko einer Störung. Statistischen Untersuchungen zeigten, dass Fehler pneumatischer Antriebssysteme häufig auf Schäden von IP-Wandlern und Pneumatikverstärkern zurückzuführen sind, da diese sowohl elektromechanischen als auch fluidmechanischen Belastungen unterliegen. Bei dem bekannten pneumatischen Antriebssystem zeigte sich, dass schon ein Schaden an einem IP-Wandler zu einer Beeinträchtigung des gesamten Antriebssystems führt. Für Anwendungen mit hoher Verfügbarkeitsanforderung oder sicherheitskritische Anlagenteile ist das bekannte System daher nur bedingt einsetzbar.

DE 40 05 546 A betrifft ein Verfahren zur redundanten Regelung von Drehzahlen oder dergleichen für dampf-, luft- oder gasdurchströmte Strömungsmaschinen, wie Dampfturbinen, mit mehreren unabhängig voneinander arbeitenden, parallelen Steuer- und Regelkreisen. Die Ansteuerung eines Dampfregelventils erfolgt entweder durch die Stellgröße des ersten Regelkreises oder die des zweiten Regelkreises.

Es ist Aufgabe der Erfindung, einen Stellungsregler bereitzustellen, der die Nachteile des Standes der Technik überwindet und insbesondere eine hohe Verfügbarkeit aufweist und für sicherheitskritische Einsatzszenarien geeignet ist.

Diese Aufgabe wird durch den Gegenstand des unabhängigen Anspruchs 1 gelöst.

Danach umfasst ein Stellungsregler für ein pneumatisches Stellgerät, wie ein pneumatisch angetriebenes Regelventil oder Sicherheitsventil, einer prozesstechnischen Anlage, eine Stromdruckwandlung mit wenigstens zwei IP-Wandlern zum Erzeugen wenigstens zweier insbesondere separater pneumatischer Steuersignale, eine Mikroelektronik zum Erzeugen wenigstens zweier elektronischer Steuersignale für die wenigstens zwei IP-Wandler, und ein Pneumatiksignalschaltventil mit wenigstens zwei Eingängen für die wenigstens zwei pneumatischen Steuersignale, einem pneumatischen Ausgang zum Weiterleiten eines pneumatischen Steuersignals an eine Arbeitskammer des pneumatischen Stellgeräts und einem elektrischen Schaltsignaleingang. Das Pneumatiksignalschaltventil weist eine erste Schaltstellung auf, in der es das eine der wenigstens zwei pneumatischen Steuersignale blockiert, und eine zweite Schaltstellung, in der es das andere der wenigstens zwei pneumatischen Steuersignale blockiert.

Das Pneumatiksignalschaltventil erlaubt es, ein bestimmtes pneumatisches Steuersignal von der Arbeitskammerzuführung auszuschließen. Bei sicherheitskritischen Anwendungen lässt sich damit in bestimmten Betriebssituationen, z.B. wenn eine Störung bei der Erzeugung eines der wenigstens zwei pneumatischen Steuersignale erkannt wird, der betreffende Pneumatikeingang des Pneumatiksignalschaltventils sperren, so dass die Arbeitskammer nicht mit dem möglicherweise fehlerbehafteten pneumatischen Steuersignal beaufschlagt wird. Durch Blockade des möglicherweise fehlerbehafteten Steuersignals nimmt das pneumatische Stellgerät selbsttätig die bei Stellgeräten in prozesstechnischen Anlagen vorgesehene Sicherheitsstellung ein, so dass die Anlage in jedem Fall in einen vordefinierten Zustand gebracht wird. Vorzugsweise ist das Pneumatiksignalschaltventil derart eingerichtet, dass das andere der wenigstens zwei pneumatischen Steuersignale dem pneumatischen Ausgang zugeleitet ist, wenn das eine Steuersignal blockiert ist. Dadurch wird eine Redundanz für das pneumatische Steuersignal zum Beaufschlagen der Arbeitskammer erreicht, so dass eine hohe Ausfallsicherheit gewährleistet ist.

Das Pneumatiksignalschaltventil umfasst eine elektrisch stellbare Signalleitmechanik, die je nach Schaltstellung einen oder mehrere der wenigstens zwei Eingänge mit dem insbesondere genau einen pneumatischen Ausgang verbindet oder einen oder mehrere der wenigstens zwei Eingänge von dem pneumatischen Ausgang trennt. Es sei klar, dass das Pneumatiksignalschaltventil auch drei, vier oder mehr Eingänge für drei, vier oder mehr pneumatische Steuersignale aufweisen kann, die wahlweise einzeln oder in Kombinationen blockiert oder einzeln oder in Kombination mit dem pneumatischen Ausgang verbunden sind. Dazu weist das Pneumatiksignalschaltventil zwei, drei, vier oder mehr Schaltstellungen auf, die bestimmten Kombinationen von Steuersignalblockade und -weiterleitung entsprechen. Mit dem Pneumatiksignalschaltventil lässt sich somit eine selektive Ab- und Zuschaltung von Steuersignalen auf die pneumatische Arbeitskammer erreichen. Das Pneumatiksignalschaltventil kann ein Schaltsignal von einer externen Überwachungseinrichtung der prozesstechnischen Anlage und/oder der Mikroelektronik des Stellungsreglers erhalten. Vorzugsweise weist das Pneumatiksignalschaltventil für eine Ansteuerung von mehr als zwei Schaltstellungen für jede Schaltstellung einen elektrischen Schaltsignaleingang auf oder sind die Schaltstellungen jeweiligen Signalschwellwerten eines einzigen Signaleingangs zugewiesen. Das Pneumatiksignalschaltventil kann auch mit einer digitalen Schnittstelle zur Ansteuerung der Schaltstellungen ausgestattet sein.

Bei einer bevorzugten Ausführung ist die Mikroelektronik dazu ausgelegt, im Falle einer vorbestimmten Betriebssituation das Pneumatiksignalschaltventil und/oder ein Pneumatikversorgungsschaltventil zwischen dem ersten und dem zweiten Schaltzustand oder zwischen dem ersten und einem dritten, vierten oder anderen Schaltzustand umzuschalten. Dazu sendet die Mikroelektronik ein Schaltsignal an den elektrischen Schaltsignaleingang. Die Mikroelektronik kann als Mikroprozessor oder Digitallogik, wie ein FPGA-Baustein, ausgeführt sein. Insbesondere erhält die Mikroelektronik die Information über das Vorliegen einer bestimmten Betriebssituation von einer stellungsreglerexternen Prozessüberwachungseinheit. Vorzugsweise arbeitet die Mikroelektronik eine oder mehrere Überwachungsroutinen ab, um eine vorbestimmte Betriebssituation zu erkennen. Es sei klar, dass die Mikroelektronik auch dazu ausgelegt sein kann, verschiedene vorbestimmte Betriebssituationen zu erkennen und zu unterscheiden sowie anhand einer Entscheidungsregel das Pneumatiksignalschaltventil derart anzusteuern, dass eine einer jeweiligen vorbestimmten Betriebssituation vorab zugeordnete Schaltstellung eingenommen wird.

Bei einer bevorzugten Ausführung weist das Pneumatiksignalschaltventil einen Schaltzustand auf, in dem mehrere der wenigstens zwei pneumatischen Steuersignale weitergeleitet werden. Durch das wahlweise Weiterleiten eines oder mehrerer pneumatischer Steuersignale lässt sich eine an bestimmte Betriebssituationen angepasste Beaufschlagung der Arbeitskammer des pneumatischen Stellgeräts realisieren. So kann beispielsweise bei hoher Last zusätzliches Luftvolumen zugeschaltet werden. Insbesondere weist das Pneumatiksignalschaltventil einen Schaltzustand auf, in dem alle pneumatischen Steuersignale blockiert sind. Bei dieser Ausführung erreicht das pneumatische Stellgerät selbst bei einer Störung aller pneumatischen Steuersignale die Sicherheitsstellung, da die Arbeitskammer vollständig von den fehlerhaften Steuersignalen abgeschirmt ist.

Bei einer bevorzugten Ausführung ist die Mikroelektronik dazu ausgelegt, im Fall einer vorbestimmten Betriebssituation, wie einer Störung der Stromdruckwandlung, eines der wenigstens zwei elektrischen Steuersignale zu deaktivieren und ein anderes der wenigstens zwei elektrischen Steuersignale zu aktivieren.

Insbesondere ist die Mikroelektronik dazu ausgelegt, bei einer Störung der Stromdruckwandlung, die Störung einem der wenigstens zwei IP-Wandler zuzuordnen und das elektrische Steuersignal dieses IP-Wandler zu deaktivieren. Die Mikroelektronik aktiviert das andere der wenigstens zwei elektrischen Steuersignale, sofern dieses nicht bereits aktiviert ist. Die Mikroelektronik ist weiterhin dazu ausgelegt, synchron mit der Deaktivierung des einen elektrischen Steuersignals das Pneumatiksignalumschaltventil in eine Schaltstellung zu verbringen, in der das pneumatische Steuersignal des IP-Wandlers mit dem pneumatischen Ausgang verschaltet ist. Vorzugsweise sind die wenigstens zwei elektrischen Steuersignale elektrisch identisch und insbesondere gegenseitig ausschließend erzeugt.

Bei einer bevorzugten Ausführung ist die Mikroelektronik mit einer Positionssensorik zum Bestimmen einer Ventilstellung des Stellgeräts und/oder zum Bestimmen einer Stellung einer beweglichen IP-Wandler-Komponente eines jeweiligen der wenigstens zwei IP-Wandler verbunden. Insbesondere ist die Positionssensorik zum Bestimmen der Stellung einer Wippe oder eines Kolbenschiebers eines jeweiligen der wenigstens zwei IP-Wandler und/oder eines jeweiligen Pneumatikverstärkers ausgelegt. Die Positionssensorik kann auch als Wegsensorik ausgeführt sein. Zusätzlich oder alternativ ist die Mikroelektronik mit einer Drucksensorik zum Bestimmen eines jeweiligen Drucks der wenigstens zwei pneumatischen Steuersignale verbunden. Die Mikroelektronik ist insbesondere dazu ausgelegt, die vorbestimmte Betriebssituation in Abhängigkeit von der Ventilstellung, der Stellung der beweglichen IP-Wandler-Komponente, einem Steuersignaldruck und/oder einem elektrischen Steuersignal zu erkennen. Die Mikroelektronik empfängt Stellungs-, Weg- und/oder Drucksignale und überprüft diese gemäß einer Überwachungsroutine. Aufgrund der unterschiedlich verwendeten Messprinzipien lässt sich auch bei hohen Sicherheitsanforderungen zuverlässig eine Aussage über den Betriebszustand und/oder eine Störung insbesondere der Strom-Druck-Wandlung treffen.

Bei einer bevorzugten Ausführung ist die Mikroelektronik dazu ausgelegt, wenigstens einen Referenzverlauf über die Zeit der Ventilstellung des Stellgeräts, einer Stellung wenigstens einer beweglichen IP-Wandler-Komponente, eines Drucks eines der wenigstens zwei pneumatischen Steuersignale oder eines der wenigstens zwei elektrischen Steuersignale (Betriebsparameter) zu speichern. Zusätzlich oder alternativ ist die Mikroelektronik dazu ausgelegt, den Referenzzeitverlauf eines Verhältnisses zwischen einem der vorgenannten Betriebsparameter zu einem oder mehreren anderen der vorgenannten Betriebsparameter zu speichern. Zur Erkennung der vorbestimmten Betriebssituation vergleicht die Mikroelektronik den gespeicherten Referenzzeitverlauf mit einem aktuell gemessenen Zeitverlauf. Dazu kann die Mikroelektronik einen Langzeitspeicher aufweisen, in dem der wenigstens eine Referenzzeitverlauf gespeichert ist sowie einen zweiten Kurzzeitspeicher, wie einen Ringspeicher, aufweisen, in dem der aktuell gemessene Verlauf abgelegt ist. Durch Vergleich des gespeicherten Referenzverlaufs mit dem aktuell gemessenen Verlauf trifft die Mikroelektronik insbesondere unter Berücksichtigung eines Toleranzbereichs eine Entscheidung, ob und/oder welche vorbestimmte Betriebssituation vorliegt. Insbesondere erkennt die Mikroelektronik durch Verhältnisbildung des Drucks eines pneumatischen Steuersignals zum elektrischen Steuersignal, ob die Strom-Druckwandlung eines jeweiligen IP-Wandlers einwandfrei funktioniert. Ist dies nicht der Fall, deaktiviert die Mikroelektronik das entsprechende elektrische Steuersignal und/oder sendet ein Schaltsignal an das Pneumatiksignalschaltventil, um das fehlerhafte pneumatische Steuersignal zu blockieren. Mit Hilfe der Überwachungsroutine der Mikroelektronik können potentielle Fehler bei der Regelung des Stellgeräts unmittelbar erkannt und durch Umschaltung behoben werden.

Bei einer bevorzugten Ausführung weist das Pneumatiksignalschaltventil eine elektrisch stellbare Schiebermechanik mit mehreren Schaltstellungen auf. Insbesondere leitet die Schiebermechanik die pneumatischen Eingänge sich gegenseitig ausschließend an den pneumatischen Ausgang weiter. Vorzugsweise ist das Pneumatiksignalschaltventil als elektrisch schaltbares 3/2-Wegeventil ausführt. Diese relativ einfache Ausführung erlaubt ein flexibles Schalten des Steuersignals zur Erhöhung der Redundanz des Stellungsreglers.

Bei einer bevorzugten Ausführung weisen die wenigstens zwei IP-Wandler je einen Pneumatikverstärker zum Erhöhen der Luftmenge der wenigstens zwei pneumatischen Steuersignale auf. Die wenigstens zwei Pneumatikverstärker sind über ein Pneumatikversorgungsschaltventil mit einer pneumatischen Versorgung verbindbar. Das Pneumatikversorgungsschaltventil weist eine erste Schaltstellung auf, in der es einen der wenigstens zwei Pneumatikverstärker mit der pneumatischen Versorgung verbindet, sowie eine zweite Schaltstellung, in der es den anderen der wenigstens zwei Pneumatikverstärker mit der pneumatischen Versorgung verbindet und den einen der wenigstens zwei Pneumatikverstärker von der pneumatischen Versorgung trennt. Die Trennung eines der wenigstens zwei Pneumatikverstärker von der Pneumatikversorgung ermöglicht im Fall eine Leckage im IP-Wandler oder einem Signalweg des pneumatischen Steuersignals den Pneumatikverstärker außer Betrieb zu nehmen, so dass der Luftverbrauch des Stellungsreglers reduziert ist. Insbesondere ist das Pneumatikversorgungsschaltventil entsprechend dem Pneumatiksignalschaltventil aufgebaut und in gleicher Weise durch die Mikroelektronik angesteuert.

Bei einer bevorzugten Ausführung für einen doppelt-wirkenden Antrieb eines pneumatischen Stellgeräts weist der Stellungsregler zwei Pneumatiksignalschaltventile auf, die jeweils wenigstens zwei Eingänge für wenigstens zwei pneumatische Steuersignale, jeweils einen pneumatischen Ausgang zum Weiterleiten eines pneumatischen Steuersignals an eine jeweilige Arbeitskammer des doppeltwirkenden Antriebs und jeweils einen elektrischen Schaltsignaleingang umfassen. Insbesondere ist der Stellungsregler dazu ausgelegt, das gleiche elektrische Schaltsignal den Schaltsignaleingängen zuzuführen. Mit Hilfe je eines Pneumatiksignalschaltventils an den beiden Arbeitskammern des doppelt wirkenden Antriebs kann das Stellgerät bezüglich beider Verfahrrichtungen vor fehlerhaften Steuersignalen geschützt werden. Insbesondere weist der Stellungsregler genau drei IP-Wandler auf, von denen ein erster IP-Wandler auf Basis eines ersten elektrischen Steuersignals ein erstes pneumatisches Steuersignal für die erste Arbeitskammer des doppelt wirkenden Antriebs erzeugt und ein zweiter IP-Wandler ein zweites pneumatisches Steuersignal auf Basis eines zweiten elektrischen Steuersignals für die zweite Arbeitskammer des doppelt wirkenden Antriebs. Der dritte IP-Wandler erzeugt auf Basis eines dritten elektrischen Steuersignals ein drittes pneumatisches Steuersignal, das über ein Verteilstück dem ersten Pneumatiksignalschaltventil als eines der wenigstens zwei pneumatischen Steuersignale und dem zweiten Pneumatiksignalschaltventil als eines der wenigstens zwei pneumatischen Steuersignale zugeführt ist. Besonders vorteilhaft bei dieser Ausführung ist, dass ein beliebiger der drei IP-Wandler ausfallen kann, ohne dass eine Funktionseinschränkung bei der Regelung des Stellgeräts einhergeht.

Bei einer bevorzugten Ausführung sind die Mikroelektronik und die Strom-Druckwandlung in einem gemeinsamen Reglergehäuse angeordnet, wobei insbesondere die wenigstens zwei IP-Wandler vorzugsweise werkzeugfrei steckbar und/oder lösbar in dem Reglergehäuse aufgenommen sind. Es sei klar, dass auch das Pneumatiksignalschaltventil und/oder das Pneumatikversorgungsschaltventil innerhalb des Reglergehäuses angeordnet sein können, um eine kompakte Montageeinheit zu bilden.

Weitere Eigenschaften, Vorteile und Merkmale der Erfindung werden durch die folgende Beschreibung bevorzugter Ausführungen anhand der beiliegenden Zeichnungen erläutert, in denen zeigen:
- Fig. 1: eine schematische Darstellung eines ersten Ausführungsbeispiels des erfindungsgemäßen Stellungsreglers;
- Fig. 2: eine schematische Darstellung eines zweiten Ausführungsbeispiels des erfindungsgemäßen Stellungsreglers;
- Fig. 3: eine schematische Darstellung eines dritten Ausführungsbeispiels des erfindungsgemäßen Stellungsreglers; und
- Fig. 4: eine schematische Darstellung eines vierten Ausführungsbeispiels des erfindungsgemäßen Stellungsreglers.

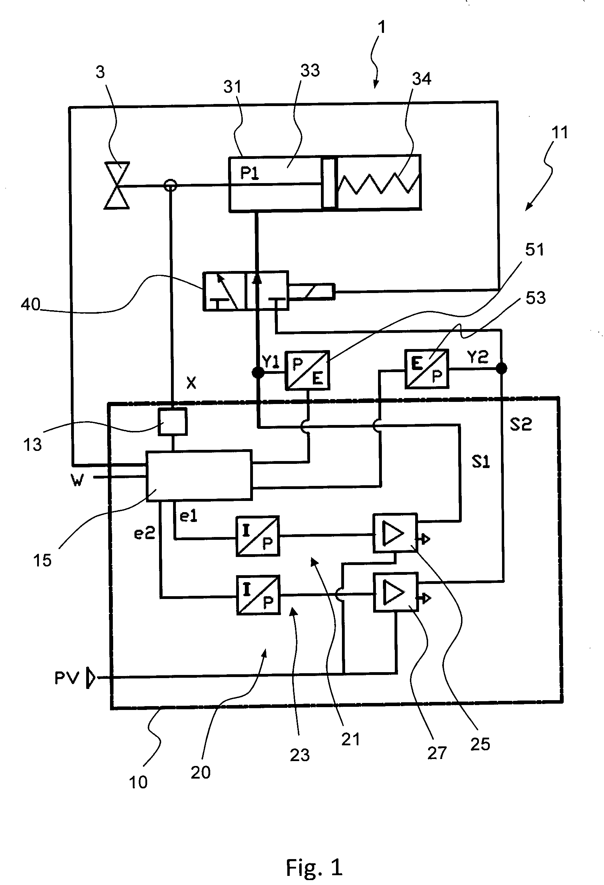

In Fig. 1 ist der erfindungsgemäße Stellungsregler 11 in Verbindung mit einem pneumatischen Stellgerät 1 gezeigt, das einen einfach wirkenden pneumatischen Antrieb 31 mit einer pneumatische Arbeitskammer 33 sowie einer Federrückstellung 34 aufweist. Der pneumatische Antrieb 31 ist stellbewegungsübertragend mit einem Ventil 3 gekoppelt.

Der Stellungsregler 11 ist in einem vorzugsweise fluiddicht verschlossenen Reglergehäuse 10 angeordnet. Der Stellungsregler 11 umfasst eine Mikroelektronik 15, eine Positionserfassungseinrichtung 13 sowie eine Strom-Druck-Wandlung 20. Der Stellungsregler 11 erhält ein Stellungssollsignal w für das Ventil 3, beispielsweise von einer Prozessleitwarte. Weiterhin weist der Stellungsregler 11 einen elektrischen Schaltausgang auf, der mit einem elektrisch betätigbaren Pneumatiksignalschaltventils 40, in einer Ausführung als 3/2-Wegeventil, verbunden ist

Die Stromdruckwandlung 20 ist durch einen ersten IP-Wandler 21 mit einem Pneumatikverstärker 25 sowie einen zweiten IP-Wandler 23 mit einem zweiten Pneumatikverstärker 27 gebildet. Der erste IP-Wandler 21 erhält ein elektrisches Steuersignal e1 von der Mikroelektronik 15 und setzt dieses in ein pneumatisches Vorsteuersignal um, das an den ersten Pneumatikverstärker 25 weitergeleitet wird. Das Vorsteuersignal des ersten IP-Wandlers 21 wird vom ersten Pneumatikverstärker 25 zur Bildung eines ersten pneumatischen Steuersignals S₁ verstärkt. Der zweite IP-Wandler 23 setzt ein von der Mikroelektronik 15 empfangenes elektrisches Steuersignal e2 in einen Vorsteuerdruck um, der durch den zweiten Pneumatikverstärker 27 zur Bildung eines zweiten pneumatischen Steuersignals S₂ verstärkt wird. Die Pneumatikverstärker 25, 27 sind über eine pneumatische Schnittstelle in dem Reglergehäuse 10 mit einer externen Druckluftquelle verbindbar. Die Mikroelektronik gibt je nach Betriebsmodus permanent identische elektrische Steuersignale e1, e2 aus oder aktiviert und deaktiviert je nach Betriebssituation wahlweise eines oder beide elektrische Steuersignale e1, e2.

Der Stellungsregler 1 weist einen ersten Drucksensor 51 auf, der mit der Mikroelektronik 15 verbunden ist, der den Druck des pneumatischen Steuersignals S₁ bestimmt und diesen als Drucksignal der Mikroelektronik 15 bereitstellt. Ein zweiter Drucksensor 53, der den Druck des pneumatischen Steuersignals S₂ bestimmt, ist ebenfalls mit der Mikroelektronik 15 verbunden und teilt ein Drucksignal betreffend das zweite pneumatische Steuersignal S₂ mit.

Der Stellungsregler 11 weist einen ersten Pneumatikausgang für das pneumatische Steuersignal S₁ auf und einen zweiten Pneumatikausgang für das pneumatische Ersatz-Steuersignal S₂.

Die Pneumatikausgänge sind mit einem jeweiligen pneumatischen Eingang des Pneumatiksignalschaltventils 40 verbunden. Das Pneumatiksignalschaltventil 40 hat genau einen pneumatischen Ausgang, der mit der Arbeitskammer 33 des pneumatischen Antriebs 31 verbunden ist und einen elektrischen Schaltanschluss, der mit der Mikroelektronik 15 verbunden ist.

Das Pneumatiksignalschaltventil 40 verbindet je nach elektrisch aktivierter Schaltstellung entweder den ersten Eingang, an dem das pneumatische Steuersignals S₁ anliegt, mit der Arbeitskammer 33 oder ausschließlich den zweiten Eingang, an dem das Steuersignals S₂ anliegt.

Die Mikroelektronik 15 ist derart programmiert, dass diese gemäß einer Überwachungsroutine permanent die Signale der Positionserfassungseinrichtung 13 sowie der Drucksensoren 51, 53 im Hinblick auf im Normalbetrieb zu erwartende Sensorsignale überprüft. Stellt der Stellungsregler 11 eine Abweichung vom Normalbetrieb fest, prüft die Mikroelektronik, ob die Abweichung auf eine Störung in der Strom-Druck-Wandlung zurückzuführen ist und welcher IP-Wandler 21, 23 gegebenenfalls dafür verantwortlich ist.

Hat die Mikroelektronik 15 eine Störung der Strom-Druck-Wandlung und den verantwortlichen IP-Wandler 21, 23 erkannt, sendet diese ein Schaltsignal, so dass das Pneumatiksignalschaltventil 40 umgeschaltet und das Steuersignal des gestörten IP-Wandlers blockiert wird. Gegebenenfalls aktiviert die Mikroelektronik 15 synchron das elektronische Steuersignal des jeweils anderen IP-Wandler 21, 23.

Zur Störungserkennung sind in dem Stellungsregler 11 mehrere Überwachungsroutinen abgelegt, die je nach Konfiguration des Stellungsreglers sowohl einzeln oder in beliebiger Kombination in der Mikroelektronik 15 abgearbeitet werden.

Gemäß einer Drucküberwachungsroutine vergleicht der Stellungsregler einen auf Basis des elektrischen Steuersignals e1 berechneten erwarteten Druckwert für das pneumatische Steuersignal S₁ und vergleicht diesen Wert mit dem von dem Drucksensor 51 bereitgestellten gemessenen Drucksignal. Über- oder unterschreitet das gemessene Drucksignal einen Toleranzbereich um den zu erwartenden Druckwert, ist von einer Störung bei der Erzeugung des pneumatischen Steuersignals auszugehen. In gleicher Weise kann die Erzeugung des pneumatischen Steuersignals S₂ auf Basis des elektrischen Steuersignals e2 erfolgen.

Gemäß einer Stellfehlererkennungsroutine erfasst der Stellungsregler 11 die Stellung des Stellventils 3 mit Hilfe der Positionserfassungseinrichtung 13. Ändert sich das Stellungssollwertsignal W im Zeitverlauf, prüft die Mikroelektronik 15, ob sich das Stellungssignal des Stellventils 3 entsprechend den gemäß dem Stellungssollwertsignal W erzeugten elektrischen Steuersignal e1, e2 ändert. Bleibt das gemessene Stellungssignal unverändert, ist von einem Stellfehler auszugehen. Die Stellfehlererkennungsroutine kann auch auf die Stellung einer jeweiligen beweglichen Komponente der IP-Wandler angewendet werden, wie der Stellung eines Kolbenschiebers oder einer Signaldrosselwippe, so dass identifiziert werden kann, ob und welcher der IP-Wandler 21, 23 für den Stellfehler verantwortlich ist.

Wird ein IP-Wandler als Fehlerursache identifiziert, erlaubt die Umschaltung von dem einen pneumatischen Steuersignal auf das andere pneumatisches Steuersignal die Anlage zumindest bis zu einem turnusgemäßen Instandhaltungstermin weiterbetreiben zu können.

Für eine Zeit-Weg-Überwachungsroutine ist in dem Stellungsregler ein Referenzverlauf für den Weg des Ventils 3 beim Verfahren und/oder eines jeweiligen Kolbenschiebers oder Drosselwippe IP-Wandlers abgelegt. Weichen die durch die Positionserfassungseinrichtung 13 für den Kolbenschieber (nicht näher dargestellt) aktuelle gemessene Wegverläufe unter Beachtung eines Toleranzbereichs von den Referenzverläufen ab, kann auf eine Störung bei der Erzeugung des pneumatischen Steuersignals geschlossen werden.

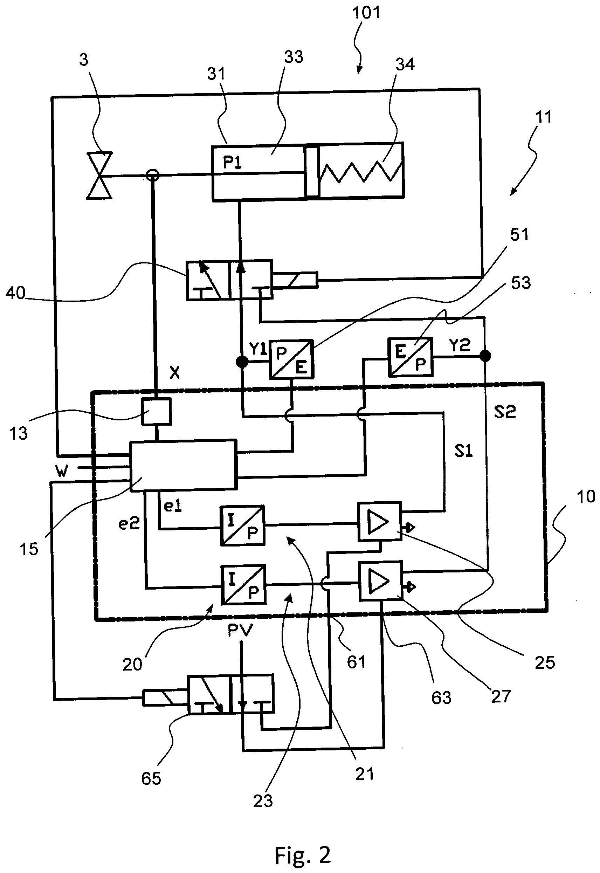

In Fig. 2 ist ein zweites Ausführungsbeispiel eines Stellungsreglers 111 dargestellt, das im Wesentlichen dem Ausführungsbeispiel gemäß Fig. 1 entspricht. Gleiche Zeichnungsbestandteile sind mit gleichen Bezugsziffern versehen. Unterschiedliche Komponenten weisen um 100 erhöhte Bezugsziffern auf.

Der Stellungsregler 111 unterscheidet sich von dem Stellungsregler 11 darin, dass der erste Pneumatikverstärker 21 und zweite Pneumatikverstärker 23 jeweils einen separaten pneumatischen Anschluss 61, 63 zum Verbinden mit einer pneumatischen Versorgung aufweisen. Die Versorgungsanschlüsse 61, 63 sind mit der pneumatischen Versorgung PV über ein Pneumatikversorgungsschaltventil oder Pneumatiksignalschaltventil 65 verbunden, die die Pneumatikversorgung gegenseitig ausschließend entweder mit dem Pneumatikverstärker 21 oder dem Ersatz-Pneumatikverstärker 23 verbindet. Die Pneumatiksignalschaltventil 65 oder Pneumatikversorgungsschaltventil ist als elektrisch schaltbares 3/2-Wegeventil ausgestaltet und von der Mikroelektronik 15 elektrisch angesteuert. Die Umschaltung der Pneumatikversorgung PV erfolgt zeitgleich mit der Umschaltung des Pneumatiksignalschaltventils 40.

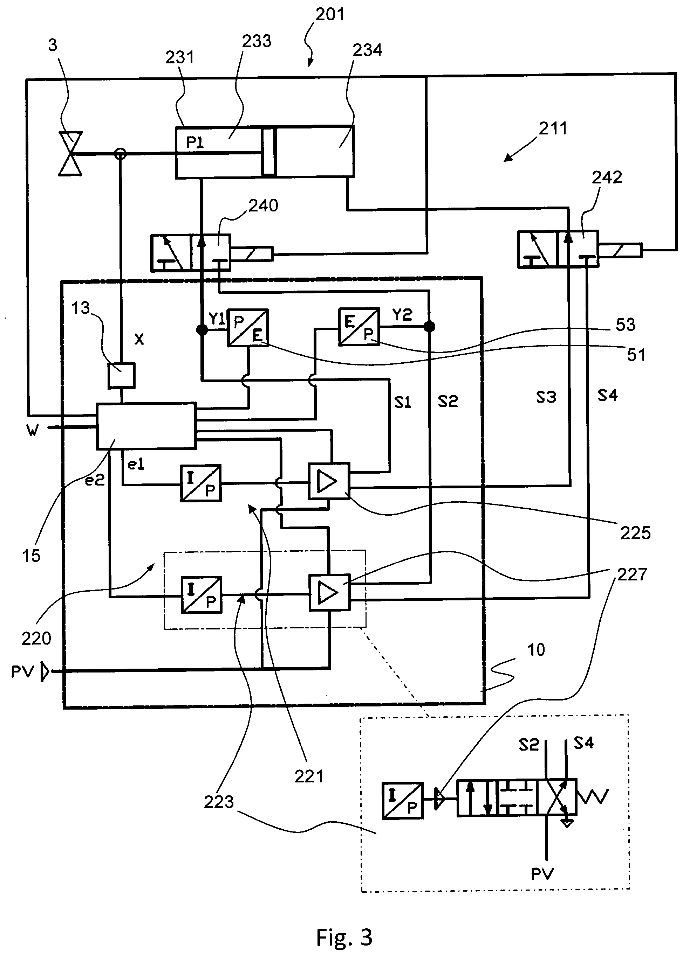

Das in Fig. 3 dargestellte Ausführungsbeispiel eines erfindungsgemäßen Stellungsreglers 211 gleicht in vielen Aspekten Stellungsregler 11 gemäß Fig. 1. Gleiche Zeichnungsbestandteile sind mit gleichen Bezugsziffern versehen. Veränderte Komponenten tragen Bezugszeichen, die um 200 erhöht sind.

Das pneumatische Stellgerät 201 in Fig. 3 unterscheidet sich vom pneumatischen Stellgerät 1 darin, dass es einen doppelt-wirkenden pneumatischen Antrieb 231 mit einer ersten pneumatischen Arbeitskammer 233 und einer zweiten pneumatischen Arbeitskammer 234 aufweist. Der Stellungsregler 211 umfasst eine Stromdruckwandlung, die dazu ausgelegt ist, für eine jeweilige der Arbeitskammern 233, 234 ein erstes pneumatisches Steuersignal S₁, S₃ sowie je ein zweites pneumatisches Steuersignal S₂, S₄ erzeugt. Zu diesem Zweck weist der IP-Wandler 221 in dem Pneumatikverstärker 225 ein Umschaltventil auf, das in einer ersten Schaltstellung ein gewandeltes und verstärktes pneumatisches Steuersignal S₁ an den ersten pneumatischen Eingang des Pneumatiksignalschaltventils 240 abgibt und die zweite Arbeitskammer 234 entlüftet. In einer zweiten Schaltstellung leitet das Umschaltventil das verstärkte Steuersignal S₃ der zweiten Arbeitskammer 234 zuleitet und entlüftet die erste Arbeitskammer 233. Die Ausführung des IP-Wandlers 221 mit nachgeschaltetem Umschaltventil ist anhand des baugleichen IP-Wandlers 223 in einer Vergrößerung illustriert, die strichliniert eingefasst ist. Der zweite IP-Wandler 223 ist entsprechend dem ersten IP-Wandler 221 aufgebaut und kann ein jeweiliges Steuersignal S₁ oder S₃ des ersten IP-Wandler 223 ersetzen, sobald ein jeweiliges der Pneumatiksignalschaltventile 240, 242, den Zugang zu den Arbeitskammern 233, 234 freigibt.

Zum Umschalten zwischen den Steuersignalen S₁, S₃ und den Steuersignalen S₂, S₄ sind die Schaltventile 240, 242 über einen gemeinsamen Schaltausgang der Mikroelektronik 15 des Stellungsreglers 211 synchron angesteuert. In der dargestellten Schaltstellung liegt der Normalbetrieb vor, in dem der IP-Wandler 221 je nach Schaltstellung des integrierten Umschaltwechselventils ein pneumatisches Steuersignal S₁ an die Arbeitskammer 233 oder ein pneumatisches Steuersignal S₃ an die Arbeitskammer 234 abgibt. Erfasst der Stellungsregler gemäß einer der vorher beschriebenen Überwachungsroutinen eine Störung, schaltet der Stellungsregler 211 die Pneumatiksignalschaltventile 240, 242 um und aktiviert gegebenenfalls das elektrische Steuersignal e2 für den IP-Wandler 223.

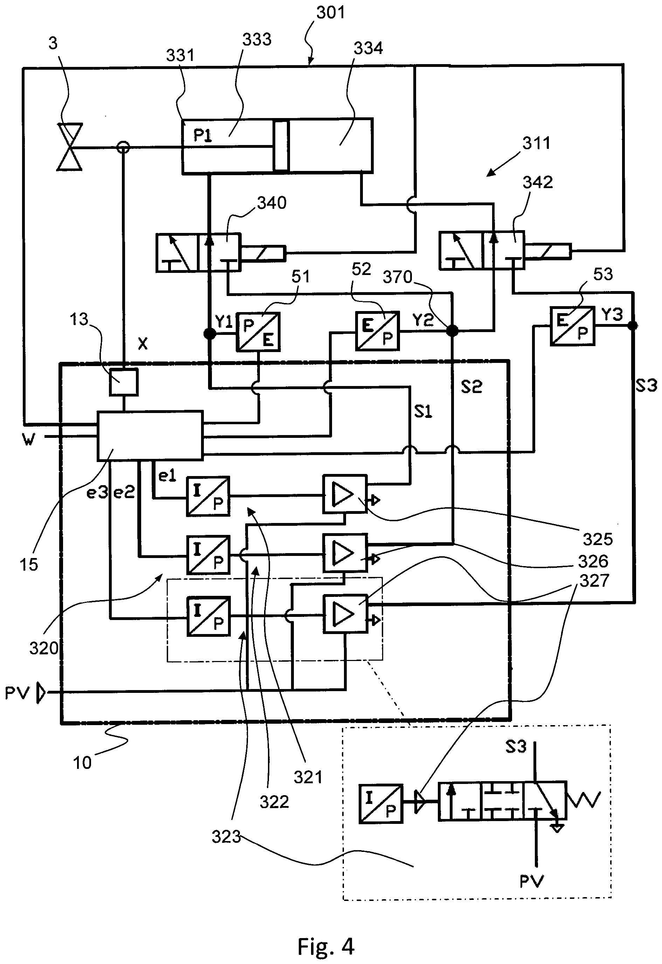

Ein viertes Ausführungsbeispiel eines erfindungsgemäßen Stellungsreglers 311 ist in Fig. 4 gezeigt. Der Stellungsregler 311 unterscheidet sich vom Stellungsregler 211 gemäß Fig. 3 vor allem dadurch, dass die Stromdruckwandlung 320 drei unabhängig voneinander arbeitende IP-Wandler 321, 322, 323 aufweist, die elektrische Steuersignale e1, e2, e3 von der Mikroelektronik 15 empfangen. Das pneumatische Steuersignal S₂ des IP-Wandlers 322 wird an einem Signalverteiler 370 aufgeteilt. An dem doppelt-wirkenden Antrieb 331 ist die erste Arbeitskammer durch den pneumatischen Ausgang des ersten Pneumatikschaltventils 340 mit einem Steuersignal beaufschlagbar. Die zweite Arbeitskammer 334 ist durch den pneumatischen Ausgang eines zweiten Pneumatiksignalschaltventils 342 mit einem Steuersignal beaufschlagbar. Die Pneumatiksignalschaltventile 340, 342 sind wie die Pneumatikschaltventile 240, 242 ausgeführt. Allerdings sind der zweite Eingang des ersten Pneumatiksignalschaltventils 340 und der erste Eingang des zweiten Pneumatiksignalschaltventils 342 mit dem Steuersignal S₂ des zweiten IP-Wandlers 322 beaufschlagt. Der zweite Eingang des zweiten Pneumatiksignalschaltventils 342 ist dem dritten Steuersignal S₃ des IP-Wandlers 322 beaufschlagt. Weiterhin unterscheidet sich der Stellungsregler 311 dahingehend von dem Stellungsregler 211, dass die IP-Wandler 321, 322, 323 ein 3/3-Wegeventil aufweisen, das ein jeweiliges Steuersignal S₁, S₂, S₃ ausgeben oder die Steuersignalleitung entlüften kann.

In der gezeigten Schaltstellung der Pneumatikschaltventile 340, 342 kann je nach Schaltstellung des Umschaltventils der IP-Wandler 321, 322 die erste Arbeitskammer 333 belüftet und die zweite Arbeitskammer 334 entlüftet werden oder zum laststeifen Halten einer Stellventilposition beide Arbeitskammern 333, 334 belüftet werden.

Erkennt die Mikroelektronik den Ausfall des IP-Wandlers 321, steuert die Mikroelektronik 15 das Pneumatiksignalschaltventil 340 derart an, dass das Steuersignal S₁ blockiert ist und das Steuersignal S₂ an die erste Arbeitskammer 333 weitergeleitet wird. Zeitgleich steuert die Mikroelektronik 15 den IP-Wandler 323 sowie das Pneumatiksignalschaltventil 342 an, so dass das Schaltsignal S₂ vom Durchtritt in die zweite Arbeitskammer 334 blockiert wird und das Steuersignal S₃ durchgelassen wird. Durch diese Umschaltung lässt sich trotz Ausfall eines IP-Wandlers die identische Regelungsfunktion aufrechterhalten.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1, 101, 201, 301: pneumatisches Antriebssystem
- 3: Stellventil
- 10: Reglergehäuse
- 11, 211, 311: Stellungsregler
- 13: Positionserfassungseinrichtung
- 15: Mikroelektronik
- 20, 220, 320: Stromdruckwandlung
- 21, 23, 221, 321, 322, 323: IP-Wandler
- 25, 27, 225, 227, 325, 327: Pneumatikverstärker
- 31, 231, 331: pneumatischer Antrieb
- 33, 233, 234, 333, 334: pneumatische Arbeitskammer
- 34: Federrückstellung
- 51, 52, 53: Drucksensor
- 61, 63: pneumatischer Anschluss
- 65: Pneumatikversorgungsschaltventil
- 40, 240, 242, 340, 342: Pneumatiksignalschaltventil
- 370: Signalverteiler
- e1, e2, e3: elektrisches Steuersignal
- S₁, S₂, S₃, S₄: pneumatisches Steuersignal

## Patentansprüche

1. Stellungsregler (11, 111, 211, 311) für ein pneumatisches Stellgerät (1, 101, 201, 301) einer prozesstechnischen Anlage, umfassend:
- eine Strom-Druck-Wandlung (20, 220, 320) mit wenigstens zwei I/P-Wandlern (21, 23, 221, 223, 321, 322, 323) zum Erzeugen wenigstens zweier separater pneumatischer Steuersignale (S₁, S₂, S₃, S₄),
- eine Mikroelektronik (15) zum Erzeugen wenigstens zweier elektrischer Steuersignale (e1, e2, e3) für die wenigstens zwei I/P-Wandler (21, 23, 221, 223, 321, 322, 323), und
- ein Pneumatiksignalschaltventil (40, 240, 242, 340, 342) mit wenigstens zwei Eingängen für die wenigstens zwei pneumatischen Steuersignale (S₁, S₂, S₃, S₄), einem pneumatischen Ausgang zum Weiterleiten eines pneumatischen Steuersignals an eine Arbeitskammer (33, 333, 334) des pneumatischen Stellgeräts (1, 201, 301) und einem elektrischen Schaltsignaleingang,
wobei das Pneumatiksignalschaltventil (40, 240, 242, 340, 342) eine erste Schaltstellung aufweist, in der es das eine der wenigstens zwei pneumatischen Steuersignale (S₁, S₂, S₃, S₄) blockiert, und eine zweite Schaltstellung, in der es das andere der wenigstens zwei pneumatischen Steuersignale (S₁, S₂, S₃, S₄) blockiert.

2. Stellungsregler (11, 111, 211, 311) nach Anspruch 1, wobei die Mikroelektronik (15) dazu ausgelegt ist, im Falle einer vorbestimmten Betriebssituation das Pneumatiksignalschaltventil (40, 240, 242, 340, 342) und/oder ein Pneumatikversorgungsschaltventil (65) zwischen dem ersten und dem zweiten oder wenigstens einem weiteren Schaltzustand umzuschalten.

3. Stellungsregler (11, 111, 211, 311) nach einem der vorstehenden Ansprüche, wobei das Pneumatiksignalschaltventil (40, 240, 242, 340, 342) einen Schaltzustand aufweist, in dem mehrere der wenigstens zwei pneumatischen Eingänge mit dem pneumatischen Ausgang verbunden sind und/oder einen weiteren Schaltzustand aufweist, in dem alle pneumatischen Steuersignale blockiert sind.

4. Stellungsregler (11, 111, 211, 311) nach einem der vorstehenden Ansprüche, wobei die Mikroelektronik (15) dazu ausgelegt ist, im Falle einer vorbestimmten Betriebssituation, wie einer Störung der Strom-Druck-Wandlung, eines der wenigstens zwei elektrischen Steuersignale (e1, e2, e3) zu deaktivieren und/oder ein anderes der wenigstens zwei elektrischen Steuersignale (e1, e2, e3) zu aktivieren.

5. Stellungsregler (11, 111, 211, 311) nach einem der vorstehenden Ansprüche, wobei die Mikroelektronik (15) mit einer Positionssensorik (13) zum Bestimmen einer Ventilstellung des Stellgeräts und/oder einer jeweiligen Stellung einer beweglichen I/P-Wandlerkomponente, wie einer Wippe oder eines Kolbenschiebers, eines jeweiligen der wenigstens zwei I/P-Wandler, und/oder einer Drucksensorik (51, 52, 53) zum Bestimmen eines jeweiligen Drucks der pneumatischen Steuersignale (S₁, S₂, S₃, S₄) verbunden ist und dazu ausgelegt ist, die vorbestimmte Betriebssituation in Abhängigkeit von der Ventilstellung, einer Stellung der beweglichen I/P-Wandlerkomponente, einem Steuersignaldruck und/oder einem elektrischen Steuersignal (e1, e2, e3) zu erkennen.

6. Stellungsregler (11, 111, 211, 311) nach einem der vorstehenden Ansprüche, wobei die Mikroelektronik (15) dazu ausgelegt ist, wenigstens einen Referenzverlauf über die Zeit der Ventilstellung des Stellgeräts, einer Stellung wenigstens einer beweglichen I/P-Wandlerkomponente, eines Druck eines der wenigstens zwei pneumatischen Steuersignale (S₁, S₂, S₃, S₄), eines der wenigstens zwei elektrischen Steuersignale (e1, e2, e3) und/oder eines Verhältnisses zwischen einem der vorgenannten Betriebsparameter und einem oder mehreren anderen der vorgenannten Betriebsparameter zu speichern und zur Erkennung einer vorbestimmten Betriebssituation den gespeicherten Referenzzeitverlauf mit einem aktuell gemessenen Verlauf zu vergleichen.

7. Stellungsregler (11, 111, 211, 311) nach einem der vorstehenden Ansprüche, wobei das Pneumatiksignalschaltventil (40, 240, 242, 340, 342) eine elektrisch stellbare Schiebermechanik mit mehreren Schaltstellung aufweist, die insbesondere die pneumatischen Eingänge gegenseitig ausschließend an den pneumatischen Ausgang weiterleitet, und/oder als 3/2-Wegeventil ausgeführt ist.

8. Stellungsregler (11, 111, 211, 311) nach einem der vorstehenden Ansprüche, wobei die wenigstens zwei I/P-Wandler je einen Pneumatikverstärker (25, 27, 225, 227, 325, 326, 327) zum Erhöhen der Luftmenge der wenigstens zwei pneumatischen Steuersignale (S₁, S₂, S₃, S₄) aufweisen und die wenigstens zwei Pneumatikverstärker (25, 27, 225, 227, 325, 326, 327) über ein Pneumatikversorgungsschaltventil (65) mit einer pneumatischen Versorgung (PV) verbindbar sind, wobei das Pneumatikversorgungsschaltventil (65) eine erste Schaltstellung aufweist, in der es einen der wenigstens zwei Pneumatikverstärker (25, 27, 325, 326, 327) mit der pneumatischen Versorgung (PV) verbindet, sowie eine zweite Schaltstellung, in der es den anderen der wenigstens zwei Pneumatikverstärker (25, 27, 325, 326, 327) mit der pneumatischen Versorgung verbindet und den einen der wenigstens zwei Pneumatikverstärker (25, 27, 225, 227, 325, 326, 327) von der pneumatischen Versorgung trennt.

9. Stellungsregler (11, 111, 211, 311) nach einem der vorstehenden Ansprüche, der zur Ansteuerung eines doppeltwirkenden Antriebs (231, 331) des pneumatischen Stellgeräts (1, 201, 301) zwei Pneumatiksignalschaltventile (240, 242, 340, 342) mit jeweils wenigstens zwei Eingängen für wenigstens zwei pneumatische Steuersignale (S₁, S₂, S₃, S₄), jeweils einem pneumatischen Ausgang zum Weiterleiten eines pneumatischen Steuersignals an eine jeweilige Arbeitskammer (333, 334) des doppeltwirkenden Antriebs und jeweils einen elektrischen Schaltsignaleingang aufweist, wobei insbesondere die elektrischen Schaltsignaleingänge der zwei Pneumatiksignalschaltventile (240, 242, 340, 342) das gleiche elektrische Schaltsignal empfangen.

10. Stellungsregler (11, 111, 211, 311) nach einem der vorstehenden Ansprüche, wobei die Mikroelektronik (15) und die Strom-Druck-Wandlung in einem gemeinsamen Reglergehäuse angeordnet sind, wobei insbesondere die wenigstens zwei I/P-Wandler und/oder die Pneumatikverstärker vorzugsweise werkzeugfrei steckbar und lösbar in dem Reglergehäuse aufgenommen sind.

## Claims

1. Position controller (11, 111, 211, 311) for a pneumatic actuator (1, 101, 201, 301) of a process plant, comprising:
- a current-pressure conversion (20, 220, 320) having at least two I/P converters (21, 23, 221, 223, 321, 322, 323) for generating at least two separate pneumatic control signals (S1, S2, S3, S4),
- microelectronics (15) for generating at least two electrical control signals (e1, e2,
e3) for the at least two I/P converters (21, 23, 221, 223, 321, 322, 323), and
- a pneumatic signal switching valve (40, 240, 242, 340, 342) with at least two inputs for the at least two pneumatic control signals (S1, S2, S3, S4), a pneumatic output for the forwarding of a pneumatic control signal to a working chamber (33, 333, 334) of the pneumatic actuator (1, 201, 301) and an electrical switching signal input,
wherein the pneumatic signal switching valve (40, 240, 242, 340, 342) comprises a first switching position, in which it blocks one of the at least two pneumatic control signals (S1, S2, S3, S4), and a second switching position in which it blocks the other of the at least two pneumatic control signals (S1, S2, S3, S4).

2. Position controller (11, 111, 211, 311) according to claim 1, wherein the microelectronics (15) is designed, in the event of a predetermined operating situation, to switch the pneumatic signal switching valve (40, 240, 242, 340, 342) and/or a pneumatic supply switching valve (65) between the first and the second, or at least one further switching state.

3. Position controller (11, 111, 211, 311) according to one of the preceding claims, wherein said pneumatic signal switching valve (40, 240, 242, 340, 342) comprises a switching state in which a plurality of the at least two pneumatic inputs are connected with the pneumatic output and/or comprises a further switching state in which all pneumatic control signals are blocked.

4. Position controller (11, 111, 211, 311) according to one of the preceding claims, the microelectronics (15) being designed, in the event of a predetermined operating situation, such as a current-to-pressure conversion fault, to deactivate one of the at least two electrical control signals (e1, e2, e3) and/or to activate another of the at least two electrical control signals (e1, e2, e3).

5. A position controller (11, 111, 211, 311) according to one of the preceding claims, wherein the microelectronics (15) is connected with position sensors (13) for determining a valve position of the actuator and/or a respective position of a movable I/P converter component, such as a rocker or a piston spool, of a respective one of the at least two I/P converters, and/or pressure sensors (51, 52, 53) for determining a respective pressure of the pneumatic control signals (S1, S2, S3, S4) and is designed to detect the predetermined operating situation as a function of the valve position, a position of the movable I/P converter component, a control signal pressure and/or an electrical control signal (e1, e2, e3).

6. Position controller (11, 111, 211, 311) according to one of the preceding claims, the microelectronics (15) being designed to store at least one reference course over the time of the valve position of the actuator, of a position of at least one movable I/P converter component, of a pressure of one of the at least two pneumatic control signals (S1, S2, S3, S4), of the at least two electrical control signals (e1, e2, e3) and/or a ratio between one of the aforementioned operating parameters and one or more other of the aforementioned operating parameters, and to compare the stored reference course over the time with a currently measured course in order to recognise a predetermined operating situation.

7. Position controller (11, 111, 211, 311) according to one of the preceding claims, the pneumatic signal switching valve (40, 240, 242, 340, 342) having an electrically adjustable slide mechanism with a plurality of switching positions, which in particular passes the pneumatic inputs mutually excluding to the pneumatic output, and/or is designed as a 3/2-way valve.

8. Position controller (11, 111, 211, 311) according to one of the preceding claims, the at least two I/P converters each comprising a pneumatic amplifier (25, 27, 225, 227, 325, 326, 327) for increasing the air volume of the at least two pneumatic control signals (S1, S2, S3, S4) and the at least two pneumatic amplifiers (25, 27, 225, 227, 325, 326, 327) are connected to a pneumatic supply (PV) via a pneumatic supply switching valve (65), wherein the pneumatic supply switching valve (65) having a first switching position in which it connects one of the at least two pneumatic amplifiers (25, 27, 325, 326, 327) to the pneumatic supply (PV), and a second switching position in which it connects the other of the at least two pneumatic amplifiers (25, 27, 325, 326, 327) to the pneumatic supply and separates the one of the at least two pneumatic amplifiers (25, 27, 225, 227, 325, 326, 327) from the pneumatic supply.

9. Position controller (11, 111, 211, 311) according to one of the preceding claims, which comprises two pneumatic signal switching valves (240, 242, 340, 342) each having at least two inputs for at least two pneumatic control signals (S1, S2, S3, S4), each having a pneumatic output for forwarding a pneumatic control signal to a respective working chamber (333, 334) of the double-acting drive and each having an electrical switching signal input for controlling a double-acting drive (231, 331) of the pneumatic actuator (1, 201, 301), wherein in particular the electrical switching signal inputs of the two pneumatic signal switching valves (240, 242, 340, 342) receive the same electrical switching signal.

10. Position controller (11, 111, 211, 311) according to one of the preceding claims, wherein the microelectronics (15) and the current-pressure conversion are arranged in a common controller housing, wherein in particular the at least two I/P converters and/or the pneumatic amplifiers are preferably plugged without tools and detachably accommodated in the controller housing.

## Revendications

1. Régulateur de position (11, 111, 211, 311) pour un dispositif de réglage pneumatique (1, 101, 201, 301) d'une installation industrielle, comprenant :
- une conversion intensité/pression (20, 220, 320) comprenant au moins deux convertisseurs I/P (21, 23, 221, 223, 321, 322, 323) destinés à produire au moins deux signaux de commande pneumatiques (S₁, S₂, S₃, S₄) séparés,
- un dispositif microélectronique (15) destiné à produire au moins deux signaux de commande électriques (e₁, e₂, e₃) pour les au moins deux convertisseurs I/P (21, 23, 221, 223, 321, 322, 323), et
- une soupape de commutation de signaux pneumatiques (40, 240, 242, 340, 342) comprenant au moins deux entrées pour les au moins deux signaux de commande pneumatiques (S₁, S₂, S₃, S₄), une sortie pneumatique pour la transmission d'un signal de commande pneumatique à une chambre de travail (33, 333, 334) du dispositif de réglage pneumatique (1, 201, 301) et une entrée de signaux de commande électriques,
dans lequel la soupape de commutation de signaux pneumatiques (40, 240, 242, 340, 342) présente une première position de commutation, dans laquelle elle bloque l'un des au moins deux signaux de commande pneumatiques (S₁, S₂, S₃, S₄), et une deuxième position dans laquelle elle bloque l'autre des au moins deux signaux de commande pneumatiques (S₁, S₂, S₃, S₄).

2. Régulateur de position (11, 111, 211, 311) selon la revendication 1, dans lequel le dispositif microélectronique (15) est conçu pour commuter la soupape de commutation de signaux pneumatiques (40, 240, 242, 340, 342) et/ou une soupape de commutation d'alimentation pneumatique (65) entre le premier et le deuxième ou au moins un autre état de commutation, dans le cas d'une situation de fonctionnement prédéfinie.

3. Régulateur de position (11, 111, 211, 311) selon l'une des revendications précédentes, dans lequel la soupape de commutation de signaux pneumatiques (40, 240, 242, 340, 342) présente un état de commutation dans lequel plusieurs des au moins deux entrées pneumatiques sont reliées à la sortie pneumatique et/ou présente un autre état de commutation, dans lequel tous les signaux de commande pneumatiques sont bloqués.

4. Régulateur de position (11, 111, 211, 311) selon l'une des revendications précédentes, dans lequel le dispositif microélectronique (15) est conçu pour désactiver l'un des au moins deux signaux de commande électriques (e₁, e₂, e₃) et/ou pour activer un autre des au moins deux signaux de commande électriques (e₁, e₂, e₃) dans le cas d'une situation de fonctionnement prédéfinie, telle qu'une panne de la conversion intensité/pression.

5. Régulateur de position (11, 111, 211, 311) selon l'une des revendications précédentes, dans lequel le dispositif microélectronique (15) est relié à un capteur de position (13) destiné à déterminer une position de soupape du dispositif de réglage et/ou une position respective d'un composant de convertisseur I/P mobile, tel qu'une bascule ou un tiroir à piston, de l'un respectif des au moins deux convertisseurs I/P, et/ou à un capteur de pression (51, 52, 53) destiné à déterminer une pression respective des signaux de commande pneumatiques (S₁, S₂, S₃, S₄) et conçu pour reconnaître la situation de fonctionnement prédéfinie en fonction de la position de soupape, d'une position du composant de convertisseur I/P mobile, d'une pression de signal de commande et/ou d'un signaux de commande électriques (e₁, e₂, e₃).

6. Régulateur de position (11, 111, 211, 311) selon l'une des revendications précédentes, dans lequel le dispositif microélectronique (15) est conçu pour enregistrer au moins une courbe de référence dans le temps de la position de soupape du dispositif de réglage, d'une position d'au moins un composant de convertisseur I/P mobile, d'une pression de l'un des au moins deux signaux de commande pneumatiques (S₁, S₂, S₃, S₄), de l'un des au moins deux signaux de commande électriques (e₁, e₂, e₃) et/ou d'un rapport entre l'un des paramètres de fonctionnement précités et plusieurs autres des paramètres de fonctionnement précités, et pour comparer la courbe temporelle de référence avec une courbe mesurée actuellement dans le but de reconnaître une situation de fonctionnement prédéfinie.

7. Régulateur de position (11, 111, 211, 311) selon l'une des revendications précédentes, dans lequel la soupape de commutation de signaux pneumatiques (40, 240, 242, 340, 342) présente une mécanique de tiroir réglable électriquement avec plusieurs positions de commutation, laquelle transmet en particulier les entrées pneumatiques à la sortie pneumatique, celles-ci s'excluant mutuellement, et/ou est conçue comme une soupape à 3/2 voies.

8. Régulateur de position (11, 111, 211, 311) selon l'une des revendications précédentes, dans lequel les au moins deux convertisseurs I/P présentent respectivement un amplificateur pneumatique (25, 27, 225, 227, 325, 326, 327) destiné à augmenter la quantité d'air des au moins deux signaux de commande pneumatiques (S₁, S₂, S₃, S₄), et les au moins deux amplificateurs pneumatiques (25, 27, 225, 227, 325, 326, 327) peuvent être reliés à une alimentation pneumatique (PV) par le biais d'une soupape de commutation d'alimentation pneumatique (65), dans lequel la soupape de commutation d'alimentation pneumatique (65) présente une première position de commutation dans laquelle elle relie l'un des au moins deux amplificateurs pneumatiques (25, 27, 325, 326, 327) à l'alimentation pneumatique (PV), et une deuxième position de commutation dans laquelle elle relie l'autre des au moins deux amplificateurs pneumatiques (25, 27, 325, 326, 327) à l'alimentation pneumatique et sépare l'un des au moins deux amplificateurs pneumatiques (25, 27, 225, 227, 325, 326, 327) de l'alimentation pneumatique.

9. Régulateur de position (11, 111, 211, 311) selon l'une des revendications précédentes, lequel présente, pour l'actionnement d'un entraînement à double action (231, 331) du dispositif de réglage pneumatique (1, 201, 301), deux soupapes de commutation de signaux pneumatiques (240, 242, 340, 342) comportant respectivement au moins deux entrées pour au moins deux signaux de commande pneumatiques (S₁, S₂, S₃, S₄), respectivement une sortie pneumatique pour la transmission d'un signal de commande pneumatique à une chambre de travail (333, 334) respective de l'entraînement à double action et respectivement une entrée de signaux de commutation électrique, dans lequel les entrées de signaux de commutation électriques des deux soupapes de commutation de signaux pneumatiques (240, 242, 340, 342) reçoivent en particulier le même signal de commutation électrique.

10. Régulateur de position (11, 111, 211, 311) selon l'une des revendications précédentes, dans lequel le dispositif microélectronique (15) et la conversion intensité/pression sont disposés dans un même boîtier de régulateur commun, dans lequel les au moins deux convertisseurs I/P et/ou les amplificateurs pneumatiques sont en particulier reçus de façon amovible et de manière à pouvoir être enfichés sans outil dans le boîtier de régulateur.
